## Europäisches Patentamt

## European Patent Office

## Office européen des brevets

(19)

(11) Publication number: **0 251 495**
**B1**

# EUROPEAN PATENT SPECIFICATION

(45) Date of publication of the patent specification:
25.10.89

(21) Application number: **87304814.4**

(22) Date of filling: **01.06.87**

(51) Int. Cl.⁴: **B 01 D 23/28,** B 01 D 13/00,
B 01 D 29/00 //
B01L11/00

(54) **Filter units having welded cellulose filters.**

(30) Priority: **17.06.86 US 875206**

(43) Date of publication of application:
**07.01.88 Bulletin 88/1**

(45) Publication of the grant of the patent:
**25.10.89 Bulletin 89/43**

(84) Designated Contracting States:
**BE CH DE FR GB IT LI LU NL SE**

(56) References cited:
**EP-A-0 059 809**
**DE-A-2 924 130**
**US-A-4 184 963**
**US-A-4 250 039**
**US-A-4 357 240**

(73) Proprietor: **Nalge Company, 75 Panorama Creek
Drive P O Box 20365, Rochester New York 14602
(US)**

(72) Inventor: **Relyea, Robert Graydon, 1669 New
Michigan road, Farmington, New York 14425 (US)**

(74) Representative: **Oliver, Roy Edward, POLLAK
MERCER & TENCH High Holborn House 52- 54
High Holborn, London WC1V 6RY (GB)**

LIBER, STOCKHOLM 1989

EP 0 251 495 B1

## Description

The present invention is directed to laboratory filterware and, more particularly, provides improved plastics material laboratory filterware units having a cellulose ester filter membrane welded in place.

In the prior art, filter membranes have been secured to laboratory filterware either by mechanical means, that is, by crimping or sandwiching a part of the filter membrane between two elements, as illustrated by US-A-3 295 686, or by welding the filter membrane to a support plate by ultrasonic welding, as disclosed in US-A-4 357 240. A plastics material filter, having a membrane comprising a cellulose ester welded to a support, is disclosed in US-A-4 184 963; DE-A-2 924 130 discloses a rain gauge having a filter membrane disposed between a collecting funnel and a receiver.

Filter membranes made of cellulose nitrate, due to its very volatile nature, have been limited to mechanical securing means. When exposed to heat, a cellulose nitrate membrane can suddenly burst into flames. Accordingly, it has always been necessary to secure cellulose nitrate filter membranes to filterware mechanically.

It has quite unexpectedly been discovered that, under certain conditions, a cellulose nitrate filter can be welded to a plastics material filterware unit.

The present invention is directed to a plastics material filterware unit having a filter membrane comprising a cellulose ester welded to a support member and a method of welding the cellulose ester membrane to the plastics filterware unit.

According to one aspect of this invention, the filterware unit, which has at least one opening for the passage of a liquid therethrough, is characterised in that the filterware membrane is made at least in part from cellulose nitrate and is heat welded to the surface of the support member.

According to another aspect of the invention, a method is provided for the manufacture of a plastics material filterware unit comprising a support plate for a filter membrane and is characterised in that the filter membrane is made at least in part of cellulose nitrate and is heat welded to the support plate by:

(a)    placing the filter membrane upon the support plate and
(b)    applying heat and pressure to at least a portion of the filter membrane for a specified period of time so as to weld the filter membrane to the support plate.

In the accompanying drawings:

Figure 1 is an elevational view showing a filterware unit of the present invention;
Figure 2 is a cross-sectional view of Fig. 1.
Figure 3 is a cross-sectional view of the filterware unit of Fig. 1 taken along the line 3 - 3;
Figure 4 is a fragmentary side view illustrating how the cellulose nitrate filter membrane is attached to the support plate of the filterware unit of the present invention; and
Figure 5 is a bottom view taken along the line 5 - 5 of Fig. 4, illustrating the horn used to seal the filter membrane to the filterware unit.

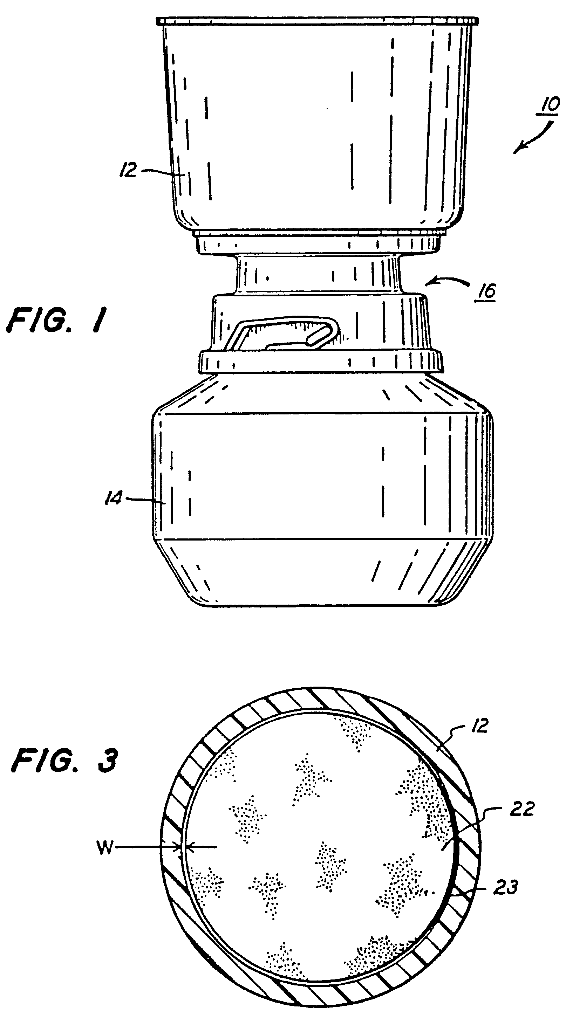

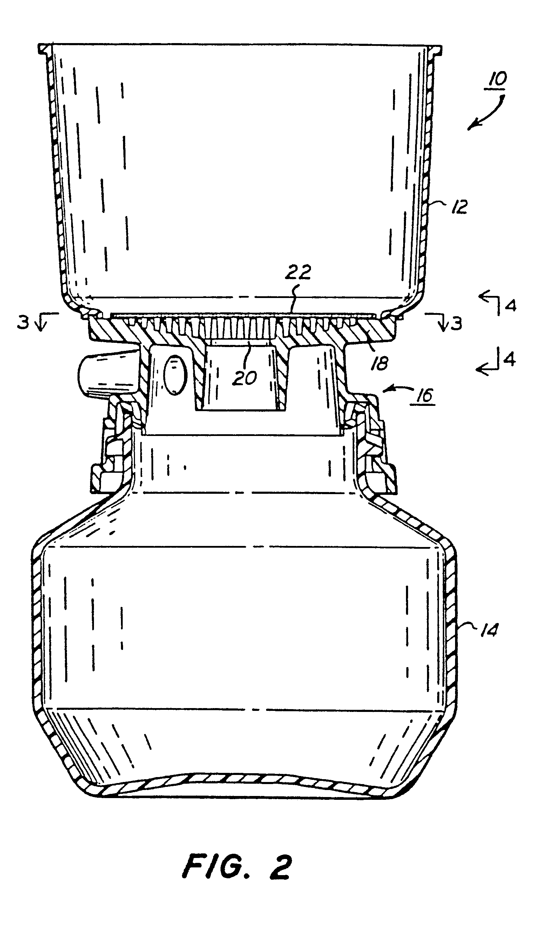

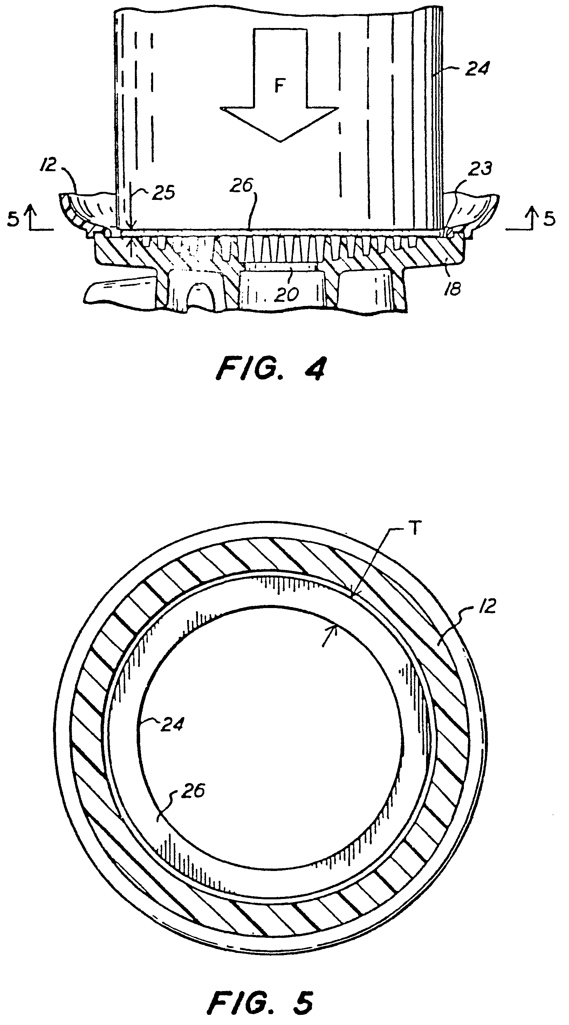

Referring to Figs. 1 and 2, a plastics material filtration unit 10, made in accordance with the present invention, is shown. The unit 10 comprises a liquid to be filtered and a lower receiving chamber 14 for receiving the filtrate. Between the upper receiving chamber 12 and the lower receiving chamber 14 is a neck portion 16 having therein a plastics support plate 18 secured thereto. In the particular embodiment illustrated, the support plate 18 is secured to the neck portion 16 by ultrasonic welding. However the support plate 18 may be secured in any desired manner. The support plate 18 is provided with at least one opening for allowing the passage of liquid to be filtered. A filter membrane 22 is disposable on top of the support plate 18. The filter membrane 22 is made at least in part of cellulose nitrate, preferably of at least fifty percent (50 %) cellulose nitrate, and in the embodiment illustrated the filter membrane 22 consists essentially of cellulose nitrate. In the embodiment illustrated, the filter membrane 22 is in the form of a disc having a substantially circular configuration, as illustrated in Figure 3. The cellulose nitrate filter membrane may take any other configuration desired, for example oval or rectangular. In the particular embodiment illustrated, the upper receiving chamber 12, the lower receiving chamber 14, the neck portion 16 and the support plate 18 are all made of a plastics material, preferably polystyrene.

Referring to Figures 4 and 5, there is illustrated a fragmentary view of the apparatus used to secure the filter membrane 22 to the support plate 18. The cellulose nitrate filter membrane 22 is initially disposed upon the surface 23 of the support plate 18. Thereafter a horn 24, which is maintained at a temperature capable of welding the membrane 22 to the support plate 18, is pressed against the outer periphery of the membrane 18 and is maintained at a temperature to cause the filter membrane to be welded to the support plate 8. It is important that the pressure and temperature of the horn be such as not to cause the cellulose nitrate filter membrane to burst into flames, which of course, would almost certainly result in destruction of the article. The horn 24 has a substantially cylindrical shell configuration, with a thickness T at its lower end 26 (Fig. 5) sufficient to provide a continuous seal around the outer periphery of the filter membrane 22, so as to prevent liquids from passing beneath the filter membrane to the receiving chamber 14 without first being filtered. It has been found that the weld formed on the membrane 22 preferably has a cross-sectional width of about 0.090 inches (2.29 mm). A continuous weld of this width has been found to be quite adequate for sealing the filtration membrane 22 to the support plate 18 so as to prevent leakage. In the particular embodiment illustrated, the thickness T is approximately one-tenth of an inch (2.5 mm). However, the thickness T should be as small as possible, so that a minimum amount of heat need be applied to the cellulose nitrate filter membrane 22. It has been found that the horn 24 should be maintained at a temperature in the range from 300° to 390°F at its lower mating end 26 i.e. from 150°C to 200°C, and, preferably in the range from 300° to 350°, i.e. from 150° to 175°C. The horn 24 is pressed against the membrane 22 at a pressure in the range from 105 to 210 kN/m² for a time period in the range from approximately 2 to 6 seconds.

Since cellulose nitrate is such a volatile material, the thickness of the filter membrane 22 should not be so great as to cause a large space between the horn 24 and the support plate 26 (18) where the membrane 22 is to be welded. The thicker the membrane 22, the longer the horn 24 will be required to be pressed against the membrane 22 to cause the plastics material underneath to melt and adhere to the membrane. In the particular embodiment illustrated, the thickness 25 of the membrane 22 is about 0.13 mm. The membrane 22 should also have a porosity sufficient to allow appropriate filtering of the liquid and also allow welding of the plastics material to the membrane 22. It has been found that a porosity in the range from 0.1 to 5.0 μm is satisfactory.

The horn 24 is preferably made of a material having good conductivity and of a sufficient mass to maintain a relatively constant temperature, so as to allow melting of the plastics support plate with relative ease. It has been found that steel works quite adequately. While not necessary, the lower end 26 may be coated with a thin layer of PTFE, e.g. "Teflon®", so as to minimize potential sticking between the horn and the membrane 22. The coating should be sufficiently thin so as to not interfere with the heat transfer function of the horn 24.

## Claims

1. A plastics material filterware unit, having a filter membrane (22) comprising a cellulose ester welded to the surface of a support member (18) for supporting the filter membrane, the support member having at least one opening (20) for the passage of a liquid therethrough, characterised in that the filter membrane (22) is made at least in part from cellulose nitrate and is heat-welded to the surface of the support member (18).

2. A filterware unit according to claim 1, wherein the filter membrane (22) is made substantially of cellulose nitrate.

3. A filterware unit according to claim 1 or 2, wherein the filter membrane (22 ) is welded continuously along its outer periphery.

4. A filterware unit according to any preceding claim, wherein the weld is substantially in the shape of a ring having a width of about 2.29 mm.

5. A filterware unit according to claim 1, 2, 3 or 4, wherein the filter membrane (22) has a thickness of 0.13 mm and a porosity in the range from 0.1 x 10⁻³ to 5.0 x 10⁻³ mm (0.1 to 5.0 μm).

6. A filterware unit according to any preceding claim, which comprises polystyrene and has an upper receiving chamber for receiving the liquid to be filtered and a lower receptacle for receiving a filtrate.

7. A method of manufacture of a plastics material filterware unit comprising a support plate (18) for a filter membrane (22), characterised in that the filter membrane (22) is made at least in part of cellulose nitrate and is heat welded to the support plate (18) by:
(a) placing the filter membrane (22) upon the support plate (18) and
(b) applying heat and pressure to at least a portion of the filter membrane (22) for a specified period of time so as to weld the filter membrane (22) to the support plate (18).

8. A method according to claim 7, wherein the heat and pressure are applied by means of a substantially cylindrical horn (24) placed at the outer periphery of the membrane (22).

9. A method according to claim 8, wherein the horn (24) is maintained at a temperature in the range from 150° to 200°C (300° to 390°F).

10. A method according to claim 9, wherein the welding temperature is in the range from 150° to 175°C (300° to 350°F).

11. A method according to any of claims 8 to 10, wherein the horn (24) is pressed against the filter membrane (22) for a time in the range from 2 to 6 seconds.

12. A method according to any of claims 8 to 11, wherein the horn (24) is pressed against the membrane with a pressure in the range from 105 to 210 kN/m².

13. A method according to any of claims 7 to 12, wherein the filter membrane (22) is made essentially of cellulose nitrate.

## Patentansprüche

1. Kunststoff-Filtriergerät mit einer Zelluloseester enthaltenden Filtermembran (22), die mit der Oberfläche eines die Filtermembran unterstützenden Stützteils (18) verschweißt ist, das wenigstens eine Öffnung (20) zum Durchlaß einer Flüssigkeit hat, dadurch gekennzeichnet, daß die Filtermembran (22) wenigstens zum Teil aus Zellulosenitrat hergestellt und mit der Oberfläche des Stützteils (18) warmverschweißt ist.

2. Filtriergerät nach Anspruch 1, in dem die Filtermembran (22) im wesentlichen aus Zellulosenitrat hergestellt ist.

3. Filtriergerät nach Anspruch 1 oder 2, in dem die Filtermembran (22) kontinuierlich längs ihres äußeren Randes verschweißt ist.

4. Filtriergerät nach einem der vorhergehenden Ansprüche, in dem die Verschweißung im wesentlichen die Form eines Rings hat, der eine Weite von etwa 2,29 mm aufweist.

5. Filtriergerät nach Anspruch 1, 2, 3 oder 4, in dem die Filtermembran (22) eine Dicke von 0,13 mm und eine Porosität im Bereich von $0,1 \times 10^{-3}$ bis $5,0 \times 10^{-3}$ mm (0,1 bis 5,0 μm) hat.

6. Filtriergerät nach einem der vorhergehenden Ansprüche, das aus Polystyrol besteht und eine obere Aufnahmekammer zum Aufnehmen der zu filternden Flüssigkeit und einen unteren Behälter zum Aufnehmen von Filtrat hat.

7. Verfahren zum Herstellen eines Kunststoff-Filtriergeräts mit einer Stützplatte (18) für eine Filtermembran (22), dadurch gekennzeichnet, daß die Filtermembran (22) wenigstens zum Teil aus Zellulosenitrat hergestellt und mit der Stützplatte (18) warmverschweißt ist durch:

(a) Anordnen der Filtermembrane (22) auf der Stützplatte (18) und

(b) Anwenden von Hitze und Druck auf wenigstens einen Teil der Filtermembran (22) während einer bestimmten Zeit, um die Filtermembran (22) an die Stützplatte (18) zu schweißen.

8. Verfahren nach Anspruch 7, bei dem die Hitze und der Druck mit einem etwa zylindrischen Horn (24) aufgebracht werden, das an dem äußeren Rand der Membran (22) angeordnet ist.

9. Verfahren nach Anspruch 8, bei dem das Horn (24) auf einer Temperatur im Bereich von 150° bis 200°C (300° bis 390°F) gehalten ist.

10. Verfahren nach Anspruch 9, bei dem die Schweißtemperatur in dem Bereich von 150° bis 175°C (300° bis 350°F) liegt.

11. Verfahren nach einem der Ansprüche 8 bis 10, bei dem das Horn (24) gegen die Filtermembran (22) für eine Zeit des Bereichs von 2 bis 6 Sekunden gepreßt wird.

12. Verfahren nach einem der Ansprüche 8 bis 11, bei dem das Horn (24) gegen die Membran mit einem Druck des Bereichs von 105 bis 210 kN/m$^2$ gepreßt wird.

13. Verfahren nach einem der Ansprüche 7 bis 12, bei dem die Filtermembran (22) im wesentlichen aus Zellulosenitrat hergestellt wird.

**Revendications**

1. Elément filtrant en matière plastique, comportant une membrane filtrante (22) en ester de cellulose soudée à la surface d'un support (18) pour supporter la membrane filtrante, le support comportant au moins un orifice (20) pour le passage d'un liquide, caractérisé en ce que la membrane filtrante (22) est constituée au moins en partie de nitrate de cellulose et est soudée thermiquement à la surface du support (18).

2. Elément filtrant suivant la revendication 1, dans lequel la membrane filtrante (22) est constituée sensiblement de nitrate de cellulose.

3. Elément filtrant suivant la revendication 1 ou 2, dans lequel la membrane filtrante (22) est soudée de façon continue le long de sa périphérie extérieure.

4. Elément filtrant suivant l'une quelconque des revendications précédentes, dans lequel la soudure est sensiblement en forme d'anneau ayant une largeur de 2,29 mm environ.

5. Elément filtrant suivant la revendication 1, 2, 3 ou 4, dans lequel la membrane filtrante (22) a une épaisseur de 0,13 mm et une porosité dans la plage de $0,1 \times 10^{-3}$ à $5,0 \times 10^{-3}$ mm (0,1 à 5,0 μm).

6. Elément filtrant suivant l'une quelconque des revendications précédentes, qui est en polystyrène et comporte une chambre de réception supérieure, pour recevoir le liquide à filtrer, et un réceptacle inférieur pour recevoir un filtrat.

7. Procédé de fabrication d'un élément filtrant en matière plastique comprenant une plaque support (18) pour une membrane filtrante (22), caractérisé en ce que la membrane filtrante (22) est constituée au moins en partie de nitrate de cellulose et est soudée thermiquement à la plaque support (18) par:

(a) mise en place de la membrane filtrante (22) sur la plaque support (18), et

(b) application de chaleur et de pression à au moins une partie de la membrane filtrante (22) pendant un laps de temps spécifié de façon à souder la membrane filtrante (22) à la plaque support (18).

8. Procédé suivant la revendication 7, dans lequel la chaleur et la pression sont appliquées au moyen d'une trompe sensiblement cylindrique (24) placée à la périphérie extérieure de la membrane (22).

9. Procédé suivant la revendication 8, dans lequel la trompe (24) est maintenue à une température dans la plage de 150°C à 200°C (300°F à 390°F).

10. Procédé suivant la revendication 9, dans lequel la température de soudage est dans la plage de 150°C à 175°C (300°F à 350°F).

11. Procédé suivant l'une quelconque des revendications 8 à 10, dans lequel la trompe (24) est pressée contre la membrane filtrante (22) pendant une durée comprise entre 2 et 6 secondes.

12. Procédé suivant l'une quelconque des revendications 8 à 11, dans lequel la trompe (24) est pressée contre la membrane avec une pression comprise entre 105 et 210 kN/m$^2$.

13. Procédé suivant l'une quelconque des revendications 7 à 12, dans lequel la membrane filtrante (22) est constituée essentiellement de nitrate de cellulose.

FIG. 1

FIG. 3

FIG. 2

FIG. 4

FIG. 5